# EUROPEAN PATENT SPECIFICATION

(11) **EP 4 595 152 B1**
(45) Date of publication and mention of the grant of the patent: **25.11.2026**
(21) Application number: 23808660.7
(22) Date of filing: 26.09.2023
(51) Int. Cl.: H01M 10/613, H01M 10/6567, H01M 10/6568, H01M 50/204, H01M 10/48, A62C 3/16, A62C 3/07

(54) **BATTERY MODULE WITH A SAFETY SYSTEM AND METHOD OF OPERATION**
BATTERIEMODUL MIT EINEM SICHERHEITSSYSTEM SOWIE BETRIEBSVERFAHREN
MODULE DE BATTERIE DOTÉ D'UN SYSTÈME DE SÉCURITÉ ET PROCÉDÉ DE FONCTIONNEMENT

(30) Priority: 29.09.2022 CZ 20220414
(43) Date of publication of application: 06.08.2025
(73) Proprietor: N-Solutions s.r.o., 68601 Stare Mesto (CZ)
(72) Inventor: NOVÁCEK, Tomás, 68601 Uherské Hradiste (CZ)
(74) Representative: Dadej, Leopold
(86) International application number: PCT/CZ2023/050062
(87) International publication number: WO 2024/067895

(56) References cited:
- EP-A1- 3 188 304
- DE-A1- 102019 219 207
- US-A1- 2022 123 383

## Description

### Technical Field

The invention relates to a batter module with a safety system that addresses the application and distribution of a flame retardant in the space between individual battery cells, in particular for battery modules with battery cell cooling using a heat transfer medium.

### Background of the Invention

Battery modules composed of a number of battery cells are devices that are prone to ignition and fires, mainly due to thermal stress or mechanical damage to the battery module. In addition to thermal changes (overheating, extreme cooling, fire, thermal shock) and mechanical effects (impact, drop, penetration, crushing, or vibration), changes in electrical properties (external or internal short circuit, overcharging, or overdischarging) are also direct causes of ignition.

A number of safety features, fuses, or sensors are currently used to protect battery modules from ignition and subsequent spread of fire to other devices. In addition, systems using the application of a flame retardant are also known, wherein the flame retardant acts as a retardant of ongoing chemical reactions and secondarily, it displaces oxygen, flammable vapours, and gases from the battery module, which contributes to a reduction of pressure and temperature in the battery module. The use of a flame retardant allows to slow down or delay the ignition of battery cells and buy time to ensure the safety of the surrounding area and extinguish the fire.

Embodiments of fire extinguishing systems of battery modules are known in the current state of the art with a closed reservoir of the flame retardant that is pushed into the space between the battery cells at a specified critical temperature, as described, for example, in the document WO2018139737 A1. The flame retardant is pushed in through a series of openings from the first side of the battery cells and on the other side of the battery cells it is drained out, wherein the application of the flame retardant is controlled based on a temperature sensor. However, in the event of a failure of the control unit or temperature sensor, the application of the flame retardant may be delayed or prevented.

A similar solution is disclosed in the patent file JP2012252909 A describing a battery module with a fire extinguishing system that comprises a reservoir and a supply of a flame retardant to the space between the battery cells. The supply of the flame retardant is sealed with a material that spontaneously melts when the critical temperature is reached, thereby discharging the flame retardant between the battery cells. A disadvantage of this solution is that it cannot be implemented in a battery module where the battery cells are cooled by circulation of a heat transfer medium.

In another known arrangement, as described, for example, in the document EP2541666 A1, the battery module comprises an array of pressurised bottles with a flame retardant, wherein a part of the bottles is located between the battery cells. When the temperature rises above the critical limit, the pressure in the bottle increases, the bottle seal breaks and the flame retardant is released into the space between the battery cells. A disadvantage of this arrangement is that the flame retardant is supplied into the battery module at only one location, wherein the rapid cooling of the entire battery module is uneven.

None of said safety systems disclose a system adapted for controlled application of a flame retardant in a battery module in which the battery cells are simultaneously cooled by a heat transfer medium from a heat exchanger. Further disadvantages are that the flame retardant is pushed into the battery module at once, wherein when applied through only one opening it is also unevenly dispersed between all the battery cells.

Other known battery modules with a safety system are disclosed in documents US2002123383 A1, DE102019219207 A1 and EP3188304 A1. However, these devices are structurally complicated and allow only slow and ineffective distribution of the flame retardant to the battery cells.

### Summary of the Invention

The above shortcomings are to some extent eliminated by the battery module with a safety system of the present invention that comprises a reservoir of a flame retardant for storing the flame retardant connected to the battery module, wherein the battery module comprises a set of at least 3 battery cells that are arranged such as to form a space between each other for the flowing of a heat transfer medium. The battery module further comprises a cooling circuit of the battery module comprising an inlet of the heat transfer medium, an outlet of the heat transfer medium, and a manifold of the heat transfer medium, wherein the manifold of the heat transfer medium is connected to the inlet of the heat transfer medium and comprises at least two mutually spaced apart mouths for the outflow of the heat transfer medium to the space for the flowing of the heat transfer medium between the battery cells, wherein the reservoir of the flame retardant is connected to the manifold of the heat transfer medium.

The manifold of the heat transfer medium acts as a heat exchanger of the battery module through which the heat transfer medium circulates and cools the battery cells. An advantage of connecting the reservoir of the flame retardant to the manifold of the heat transfer medium is the efficient distribution of the flame retardant, since the heat transfer medium is replaced by the flame retardant in the manifold and the flow of the flame retardant is subsequently, through the individual mouths of the manifold, divided into multiple parallel currents passing through the space between the battery cells.

The reservoir of the flame retardant is, in a preferred embodiment, connected by a connecting piping directly to the manifold of the heat transfer medium, wherein the connecting piping comprises a seal or a valve, wherein the seal is made of a material with a melting temperature corresponding to the first critical temperature of the battery module, and the valve comprises an electronic control connected to a temperature sensor. The inclusion of a disposable seal made of meltable material or an electronically controlled thermoregulation valve ensures the automatic release of the flame retardant into the manifold and the ready application of the flame retardant into the space between the battery cells when the critical temperature is reached in the battery module. The first critical temperature means a temperature at which there is a risk of sudden and uncontrolled overheating of the battery cell and consequently a risk of ignition of the battery module.

In a preferred embodiment of the safety system of the battery module, the cooling circuit of the battery module comprises a supply piping of the heat transfer medium connected to an inlet of the heat transfer medium provided with a first multi-way valve, wherein the reservoir of the flame retardant is connected to the manifold of the heat transfer medium via the supply piping, wherein the reservoir of the flame retardant is connected to the supply piping via the first multi-way valve. The embodiment of the connection of the reservoir of the flame retardant to the inlet of the heat transfer medium via the supply piping with the first multi-way valve allows to reduce the number of transport paths in the system.

The first multi-way valve is, in a preferred embodiment, a three-way valve having two positions, wherein in the first position the penetration of the heat transfer medium to the manifold is open and the penetration of the flame retardant is closed, and in the second position the penetration of the flame retardant to the manifold of the heat transfer medium is open and the penetration of the heat transfer medium is closed. The embodiment of the connection of the reservoir of the flame retardant via the supply piping to the first multi-way valve allows to selectively switch between the supply of the heat transfer medium and the supply of the flame retardant to the manifold. An advantage over the embodiment with a meltable seal is the possibility to close again the access of the flame retardant to the manifold.

The cooling circuit of the battery module comprises a cooler of the heat transfer medium and a drain piping connecting the outlet of the heat transfer medium and the cooler of the heat transfer medium, wherein the drain piping is provided with a second multi-way valve and the reservoir of the flame retardant is connected to the drain piping via the second multi-way valve. The connection of the reservoir of the flame retardant to the drain piping via a second connecting piping and a second multi-way valve allows the heat transfer medium to be drained into the reservoir of the flame retardant.

The second multi-way valve is a three-way valve having two positions, wherein in the first position the penetration to the cooler of the heat transfer medium is open and the penetration to the reservoir of the flame retardant is closed and in the second position the penetration to the cooler of the heat transfer medium is closed and the penetration to the reservoir of the flame retardant is open. By switching the second multi-way valve to the second position, the penetration of the heat transfer medium into the cooler is therefore closed, wherein the heat transfer medium is drained from the manifold only into the reservoir of the flame retardant, from where the flame retardant is more quickly spontaneously displaced by the heat transfer medium into the manifold.

In a preferred embodiment, at least a part of the manifold of the heat transfer medium is made of a material whose melting temperature is higher than the melting temperature of the seal. By combining a disposable seal or thermoregulation valve and subsequently a meltable manifold, the application of the flame retardant can be achieved in two steps, wherein the melting of the manifold or its part accelerates the local application of the flame retardant directly to the overheated battery cell, or the application of the flame retardant to the entire space between the battery cells in case the temperature rises rapidly.

In a preferred embodiment of the manifold of the heat transfer medium, the mouth for the outflow of the heat transfer medium has the shape of a pipe inserted between the battery cells. An embodiment of the mouth in the shape of a pipe is preferred for directing the flow of the heat transfer medium or flame retardant from the manifold.

The essence of the method of operation of the safety system of a battery module of the present invention is that, when the first critical temperature is reached, the access of the flame retardant to the manifold of the heat transfer medium, through which the flame retardant is discharged through the mouths for the outflow of the heat transfer medium into the space for the flowing of the heat transfer medium between the battery cells, is open, wherein the heat transfer medium is drained via the drain piping into the reservoir of the flame retardant. This method of application of the flame retardant allows the existing manifold of the heat transfer medium to be used when the first critical temperature is reached to efficiently distribute the flame retardant instead of the heat transfer medium.

In a preferred embodiment of the method of operation of the safety system of the battery module, the access of the heat transfer medium to the manifold is closed when the first critical temperature is reached. By closing the access of the heat transfer medium, the access of solely the flame retardant to the manifold is favoured and the application of the flame retardant is accelerated.

In a preferred embodiment of the method of operation of the safety system of the battery module, at least a part of the manifold of the heat transfer medium is melted when the second critical temperature is reached, the second critical temperature being higher than the first critical temperature. By melting at least a part of the manifold, acceleration of the application of the flame retardant is achieved, which is preferred in the case of uneven temperature distribution within the battery module, wherein the manifold may be melted only in the region with overheated battery cells or at a particular critically overheated battery cell.

### Clarification of the Drawings

A summary of the invention is further clarified by exemplary embodiments thereof, which are described using the accompanying drawings, in which:
fig. 1 schematically shows a first exemplary embodiment of the safety system of a battery module of the present application,
fig. 2 schematically shows a second exemplary embodiment of the safety system of a battery module of the present invention with multi-way valves.

### Exemplary Embodiments of the Invention

The invention will be further clarified by example embodiments with reference to the respective drawings.

The first exemplary embodiment does not fall within the scope of claim 1 because the cooling circuit 5 thereof does not comprise a second multi-way valve 15.

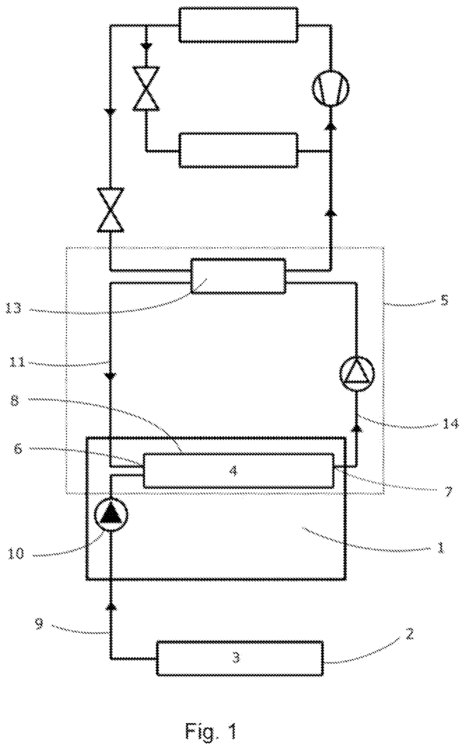

The first exemplary embodiment of the invention is a safety system of a battery module 1 with a cooling circuit 5 of the battery module, where the reservoir 2 of the flame retardant is connected by a connecting piping 9 directly to the manifold 8 of the heat transfer medium, which is schematically shown in Fig. 1.

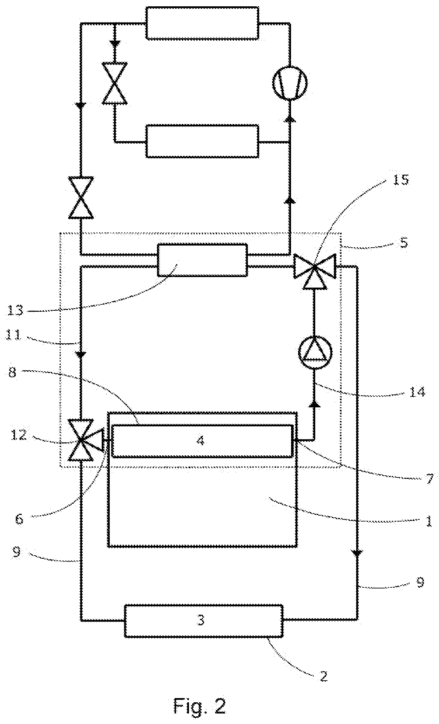

The safety system of the battery module 1 comprises a reservoir 2 of the flame retardant for storing the flame retardant 3, the battery module 1 with the cooling circuit 5, and the connecting piping 9 for supplying the flame retardant 3 to the battery module 1, wherein the battery module 1 comprises a set of at least 3 battery cells that between them form a space for the flowing of the heat transfer medium 4. The cooling circuit 5 of the battery module comprises an inlet 6 of the heat transfer medium to the battery module 1, an outlet 6 of the heat transfer medium from the battery module 1, and further the manifold 8 of the heat transfer medium connected to the inlet 6 of the heat transfer medium, wherein the inlet and outlet 6,7 of the heat transfer medium mean openings for the supply and drain of the heat transfer medium 4. The heat transfer medium 4 in this embodiment is a cooling liquid that enters the space between the battery cells via the manifold 8, thereby cooling the battery cells. The cooling circuit 5 of the battery module further comprises a cooler 13 of the heat transfer medium, wherein the inlet 6 of the heat transfer medium is connected to the cooler 13 by a supply piping 11 that supplies into the battery module 1 the heat transfer medium 4 ready for cooling the battery cells, and the outlet 7 of the heat transfer medium is connected to the cooler 13 by a drain piping 14 draining the heated heat transfer medium 4 back into the cooler 13. The cooling circuit 5 is part of the vehicle's HVAC system (Heating, Ventilation, and Air Conditioning System), which is used to control the temperature, ventilation, and air quality inside the vehicle. The entire HVAC system comprises additional elements, which are schematically shown in Fig. 1 and 2 in the space above the cooling circuit 5.

The manifold 8 of the heat transfer medium connected to the inlet 6 of the heat transfer medium is located inside the battery module 1 and it is an integrated channel with separate mouths (not shown in the figure), which is in direct contact with all the battery cells. The flow of the heat transfer medium 4 is divided by these mouths into a number of parallel currents passing through the space for the flowing of the heat transfer medium 4 between the battery cells, wherein the number of the mouths corresponds to the number of the battery cells. The reservoir 2 of the flame retardant for storing the flame retardant 3 is connected to the manifold 8 by the connecting piping 9, wherein the connecting piping 9 comprises a closure adapted to release the passage of the flame retardant 3 into the manifold 8 when the first critical temperature of the battery module 1 is reached. In the first exemplary embodiment, the closure is made as a disposable seal 10 located at the location of connection of the connecting piping 9 to the manifold 8 and made of a special material, wherein the melting point of the material of the seal 10 is the same as the first critical temperature at which it is desired to fill the manifold 8 with the flame retardant 3. When the first critical temperature is reached, the seal 10 is melted, thereby allowing the flame retardant 3 to be pushed into the manifold 8. The closure in the form of the disposable seal 10 can be located anywhere in the connecting piping 9 but always inside the battery module 1 such that the seal 10 can be melted by conducting heat depending on the temperature inside the battery module 1.

The first critical temperature corresponds approximately to the minimum temperature at which electrochemical changes occur in the battery cell, which is considered to be the trigger for thermal runaway, during which rapid and uncontrolled overheating of the battery cell occurs and consequently the risk of ignition of the battery cell arises. For conventional battery cells, the first critical temperature ranges from 80 to 120 °C, depending on the type and chemical composition; for some types of battery cells, the lower limit may be even below 50 °C. However, for the safety system of the battery module 1 of the invention, the value of the first critical temperature is further dependent on the cooling capacity of the circulating heat transfer medium 4 and the efficiency of the heat transfer medium 4 of cooling the overheated battery cell so as to prevent it from igniting. If the overheated battery cell is sufficiently cooled by the heat transfer medium 4, this battery cell is no longer functional, but the remaining battery cells in the battery module 1 still function and there is no risk of ignition and damage to the entire battery module 1.

The manifold 8, or at least the critical part of the manifold 8 in contact with the battery cells, is made of a material whose melting point corresponds to a second critical temperature, wherein the second critical temperature is higher than the first critical temperature and corresponds to a temperature at which a faster (instantaneous) release of the flame retardant 3 from the manifold 8 into the space between the overheated battery cells is desired. The second critical temperature again depends on the type and chemical composition of the battery cells and the cooling capacity of the circulating heat transfer medium 4, wherein it can range from 150 to 220 °C.

The application of the flame retardant 3 to the battery module 1 using the safety system of the first exemplary embodiment proceeds as follows: First, when the first critical temperature is reached in the battery module 1, the seal 10 between the reservoir 2 of the flame retardant and the manifold 8 is melted. Depending on the rate of the temperature rise, the melting of the seal 10 may take place over a longer period of time and open the passage of the flame retardant 3 into the manifold 8 in a gradual manner. The manifold 8 is thus filled with the flame retardant 3 and the heat transfer medium 4 is displaced at the same time, wherein the reservoir 2 of the flame inhibitor is located in the space above the battery module 1 in this exemplary embodiment and the pushing of the flame retardant 3 into the manifold 8 occurs spontaneously due to gravity. Thus, at this point, the safety system is ready. When the temperature of the battery module 1 rises further to the second critical temperature, the manifold 8 or a part thereof is melted and the flame retardant 3 is subsequently released into the entire space between the battery cells. The manifold 8 is in direct contact with the battery cells, and therefore the melting of the manifold 8 can only occur at the critical location of overheated battery cells.

In the second exemplary embodiment of the safety system of the battery module 1 schematically shown in Fig. 2, the supply piping 11 leading to the inlet 6 of the heat transfer medium comprises a first multi-way valve 12, wherein the reservoir 2 of the flame retardant is connected by the connecting piping 9 to the supply piping 11 via the first multi-way valve 12. In this embodiment, it is a thermoregulation, electronically controlled three-way valve having two positions, wherein in the first position the penetration of the heat transfer medium 4 to the manifold 8 is open and the penetration of the flame retardant 3 to the manifold 8 is closed, and in the second position the penetration of the flame retardant 3 to the manifold 8 is open and the penetration of the heat transfer medium 4 to the manifold 8 is closed. The first multi-way valve 12 is thus adapted to switch or divide the supply of the heat transfer medium 4 and the flame retardant 3 to the manifold 8.

The second exemplary embodiment comprises a second connecting piping 9 that directly connects the reservoir 2 of the flame retardant and the drain piping 14, wherein the reservoir 2 of the flame retardant is connected by the second connecting piping 9 to the drain piping 14 via a second multi-way valve 15, where the second multi-way valve 15 is again a three-way valve having two positions. In the first position, the penetration of the heat transfer medium 4 from the manifold 8 to the cooler 13 of the heat transfer medium is open and the penetration to the reservoir 2 of the flame retardant is closed, and in the second position, the penetration to the cooler 13 of the heat transfer medium is closed and the penetration to the reservoir 2 of the flame retardant is open. By introducing a second connecting piping 9 and a second multi-way valve 15, the reservoir 2 of the flame retardant is also directly connected in the circuit to the drain piping 14, wherein by adjusting the first and second multi-way valves 12,15 it is possible to switch between the passage of the heat transfer medium 4 and the flame retardant 3 through the manifold 8. In the second exemplary embodiment of the safety system, the pushing of the flame retardant 3 into the manifold 8 is driven by a pump, wherein the location of the reservoir 2 of the flame retardant relative to the battery module 1 is not limited by space in any way.

The application of the flame retardant to the battery module 1 using the safety system of the second exemplary embodiment occurs as follows: When the first critical temperature is reached in the battery module 1, the first multi-way valve 12 is switched from the first position to the second position and the medium supplied to the manifold 8 is changed from the heat transfer medium 4 to the flame retardant 3 (from the reservoir 2 of the flame retardant). At the same time, the second multi-way valve 15 is switched from the first position to the second position, wherein the access of the heat transfer medium 4 to the cooler 13 is closed and the heat transfer medium 4 is drawn through the second multi-way valve 15 into the reservoir 2 of the flame retardant, by which the flame retardant 3 is pushed out of the reservoir 2 of the flame retardant and subsequently supplied directly into the manifold 8 via the connecting piping 9 and the supply piping 11. Thus, the flame retardant 3 is supplied into the manifold 8 via the inlet 6 of the heat transfer medium instead of the heat transfer medium 4. After the manifold 8 is filled with the flame retardant 3, the safety system is ready, wherein after the second critical temperature is reached, the extinguishing process is identical to that of the safety system of the first exemplary embodiment.

In an alternative embodiment of the manifold 8 of the heat transfer medium, the mouth for the outflow of the heat transfer medium 4 has the shape of a pipe inserted between the battery cells. By shaping the mouth in the form of pipes, the flow of the heat transfer medium 4 and therefore the flame retardant 3 can be better directed between the battery cells.

In an alternative embodiment, the disposable seal 10 in the connecting piping 9 may be replaced by an electronically controlled thermoregulation valve connected to a temperature sensor (not shown in the figure), wherein the valve may partially or completely open the passage of the flame retardant 3 to the manifold 8. The thermoregulation valve itself may be located anywhere along the length of the connecting piping 9 between the reservoir 2 of the flame retardant and the manifold 8 even outside the battery module 1, wherein at least the temperature sensor communicatively connected to the thermoregulation valve must be in direct contact with the heat transfer medium 4 in the battery module 1. An advantage of the electronically controlled valve is the possibility of closing again the passage of the flame retardant 3 to the manifold 8.

Alternative embodiments of the safety system 1 of the battery module may comprise combinations of the elements disclosed in the first and second exemplary embodiments. E.g., the first exemplary embodiment may alternatively comprise the application of the flame retardant 3 from the reservoir 2 of the flame retardant to the manifold 8 using a pump or pressurisation.

Another embodiment of the safety system may comprise only one (first) multi-way valve 12 connecting the reservoir 2 of the flame retardant to the inlet 6 of the heat transfer medium to the battery module 1.

The safety system of the battery module 1 of the second exemplary embodiment can also be adapted for an array of multiple battery modules 1 connected in parallel, wherein the reservoir 2 of the flame retardant is connected via respective first multi-way valves 12 to each of the battery modules 1 in the array. In this embodiment, the flame retardant 3 is applied only to the particular battery module 1 that is at risk of fire, which makes saving the remaining battery modules 1 possible.

### List of Reference Numerals

- 1 -: battery module
- 2 -: reservoir of the flame retardant
- 3 -: flame retardant
- 4 -: heat transfer medium
- 5 -: cooling circuit of the battery module
- 6 -: inlet of the heat transfer medium
- 7 -: outlet of the heat transfer medium
- 8 -: manifold of the heat transfer medium
- 9 -: connecting piping
- 10 -: seal
- 11 -: supply piping
- 12 -: first multi-way valve
- 13 -: cooler
- 14 -: drain piping
- 15 -: second multi-way valve

## Claims

1. A battery module (1) with a safety system comprising a reservoir (2) of a flame retardant for storing the flame retardant (3) connected to the battery module (1), wherein the battery module (1) comprises a set of at least 3 battery cells, the battery cells being arranged such as to form a space between them for the flowing of a heat transfer medium (4), wherein the battery module (1) comprises a cooling circuit (5) of the battery module comprising an inlet (6) of the heat transfer medium, an outlet (7) of the heat transfer medium, and a manifold (8) of the heat transfer medium, wherein the manifold (8) of the heat transfer medium is connected to the inlet (6) of the heat transfer medium and comprises at least two mutually spaced apart mouths for the outflow of the heat transfer medium (4) into the space for the flowing of the heat transfer medium (4) between the battery cells, wherein the reservoir (2) of the flame retardant is connected to the manifold (8) of the heat transfer medium, **characterised in that** the cooling circuit (5) of the battery module comprises a cooler (13) of the heat transfer medium and a drain piping (14) connecting the outlet (7) of the heat transfer medium and the cooler (13) of the heat transfer medium, wherein the drain piping (14) is provided with a second multi-way valve (15) and the reservoir (2) of the flame retardant is connected to the drain piping (14) via the second multi-way valve (15), wherein the second multi-way valve (15) is a three-way valve having two positions, wherein in the first position the penetration to the cooler (13) of the heat transfer medium is open and the penetration to the reservoir (2) of the flame retardant is closed and in the second position the penetration to the cooler (13) of the heat transfer medium is closed and the penetration to the reservoir (2) of the flame retardant is open.

2. The battery module (1) with the safety system of claim 1, **characterised in that** the reservoir (2) of the flame retardant is connected by a connecting piping (9) directly to the manifold (8) of the heat transfer medium, wherein the connecting piping (9) comprises a seal (10) or a valve (12), wherein the seal (10) is made of a material with a melting temperature corresponding to a first critical temperature of the battery module (1), and that the valve comprises an electronic control connected to a temperature sensor.

3. The battery module (1) with the safety system of claim 2, **characterised in that** the connecting piping (9) comprises the seal (10), wherein at least part of the manifold (8) of the heat transfer medium is made of a material whose melting temperature is higher than the melting temperature of the seal (10).

4. The battery module (1) with the safety system of any one of claims 1 to 2, **characterised in that** the cooling circuit (5) of the battery module comprises a supply piping (11) of the heat transfer medium connected to the inlet (6) of the heat transfer medium provided with a first multi-way valve (12), wherein the reservoir (2) of the flame retardant is connected to the manifold (8) of the heat transfer medium via the supply piping (11), wherein the reservoir (2) of the flame retardant is connected to the supply piping (11) via the first multi-way valve (12).

5. The battery module (1) with the safety system of claim 4, **characterised in that** the first multi-way valve (12) is a three-way valve having two positions, wherein in the first position the penetration of the heat transfer medium (4) to the manifold (8) is open and the penetration of the flame retardant (3) is closed, and in the second position the penetration of the flame retardant (3) to the manifold (8) of the heat transfer medium is open and the penetration of the heat transfer medium (4) is closed.

6. The battery module (1) with the safety system of any one of claims 1 to 5, **characterised in that** the mouth for the outflow of the heat transfer medium (4) from the manifold (8) of the heat transfer medium has the shape of a pipe inserted between the battery cells.

7. A method of operation of the battery module (1) with the safety system of any one claims 1 to 6, **characterised in that** when a first critical temperature is reached, the access of the flame retardant (3) to the manifold (8) of the heat transfer medium, through which the flame retardant (3) is discharged through the mouths for the outflow of the heat transfer medium (4) into the space for the flowing of the heat transfer medium (4) between the battery cells, is open, wherein the heat transfer medium (4) is drained via the drain piping (14) into the reservoir (2) of the flame retardant.

8. The method of operation of the battery module (1) with the safety system of claim 7, **characterised in that** when the first critical temperature is reached, the access of the heat transfer medium (4) to the manifold (8) is closed.

9. The method of operation of the battery module (1) with the safety system of any one of claims 7 to 8, **characterised in that** at least a part of the manifold (8) of the heat transfer medium is melted when a second critical temperature is reached, the second critical temperature being higher than the first critical temperature.

## Patentansprüche

1. Ein Batteriemodul (1) mit einem Sicherheitssystem, das einen Vorratsbehälter (2) für ein Flammschutzmittel zur Speicherung des Flammschutzmittels (3) umfasst, der mit dem Batteriemodul (1) verbunden ist, wobei das Batteriemodul (1) einen Satz von mindestens 3 Batteriezellen umfasst, wobei die Batteriezellen so angeordnet sind, dass sie zwischen sich einen Raum für den Durchfluss eines Wärmeträgermediums (4) bilden, wobei das Batteriemodul (1) einen Kühlkreislauf (5) des Batteriemoduls umfasst, der einen Einlass (6) für das Wärmeträgermedium, einen Auslass (7) für das Wärmeträgermedium und einen Verteiler (8) für das Wärmeträgermedium umfasst, wobei der Verteiler (8) für das Wärmeträgermedium mit dem Einlass (6) für das Wärmeträgermedium verbunden ist und mindestens zwei voneinander beabstandete Öffnungen für den Austritt des Wärmeträgermediums (4) in den Raum für den Durchfluss des Wärmeträgermediums (4) zwischen den Batteriezellen umfasst, wobei der Vorratsbehälter (2) für das Flammschutzmittel mit dem Verteiler (8) für das Wärmeträgermedium verbunden ist, **dadurch gekennzeichnet, dass** der Kühlkreislauf (5) des Batteriemoduls einen Kühler (13) des Wärmeträgermediums und eine Abflussleitung (14) umfasst, die den Auslass (7) für das Wärmeträgermedium und den Kühler (13) des Wärmeträgermediums verbindet, wobei die Abflussleitung (14) mit einem zweiten Mehrwegeventil (15) versehen ist und der Vorratsbehälter (2) für das Flammschutzmittel über das zweite Mehrwegeventil (15) mit der Abflussleitung (14) verbunden ist, wobei das zweite Mehrwegeventil (15) ein Dreiwegeventil mit zwei Stellungen ist, wobei in der ersten Stellung der Durchgang zum Kühler (13) des Wärmeträgermediums geöffnet und der Durchgang zum Vorratsbehälter (2) für das Flammschutzmittel geschlossen ist und in der zweiten Stellung der Durchgang zum Kühler (13) des Wärmeträgermediums geschlossen und der Durchgang zum Vorratsbehälter (2) für das Flammschutzmittel geöffnet ist.

2. Das Batteriemodul (1) mit dem Sicherheitssystem nach Anspruch 1, **dadurch gekennzeichnet, dass** der Vorratsbehälter (2) für das Flammschutzmittel über eine Verbindungsleitung (9) direkt mit dem Verteiler (8) für das Wärmeträgermedium verbunden ist, wobei die Verbindungsleitung (9) eine Dichtung (10) oder ein Ventil (12) aufweist, wobei die Dichtung (10) aus einem Material mit einer Schmelztemperatur besteht, die einer ersten kritischen Temperatur des Batteriemoduls (1) entspricht, und das Ventil eine mit einem Temperatursensor verbundene elektronische Steuerung umfasst.

3. Das Batteriemodul (1) mit dem Sicherheitssystem nach Anspruch 2, **dadurch gekennzeichnet, dass** die Verbindungsleitung (9) die Dichtung (10) umfasst, wobei zumindest ein Teil des Verteilers (8) für das Wärmeträgermedium aus einem Material besteht, dessen Schmelztemperatur höher ist als die Schmelztemperatur der Dichtung (10).

4. Das Batteriemodul (1) mit dem Sicherheitssystem nach einem der Ansprüche 1 bis 2, **dadurch gekennzeichnet, dass** der Kühlkreislauf (5) des Batteriemoduls eine Zufuhrleitung (11) für das Wärmeträgermedium umfasst, die mit dem Einlass (6) für das Wärmeträgermedium verbunden ist, der mit einem ersten Mehrwegeventil (12) versehenen ist, wobei der Vorratsbehälter (2) für das Flammschutzmittel über die Zufuhrleitung (11) mit dem Verteiler (8) für das Wärmeträgermedium verbunden ist, wobei der Vorratsbehälter (2) für das Flammschutzmittel über das erste Mehrwegeventil (12) mit der Zufuhrleitung (11) verbunden ist.

5. Das Batteriemodul (1) mit dem Sicherheitssystem nach Anspruch 4, **dadurch gekennzeichnet, dass** das erste Mehrwegeventil (12) ein Dreiwegeventil mit zwei Stellungen ist, wobei in der ersten Stellung der Durchfluss des Wärmeträgermediums (4) zum Verteiler (8) geöffnet und der Durchfluss des Flammschutzmittels (3) geschlossen ist, und in der zweiten Stellung der Durchfluss des Flammschutzmittels (3) zum Verteiler (8) für das Wärmeträgermedium geöffnet und der Durchfluss des Wärmeträgermediums (4) geschlossen ist.

6. Das Batteriemodul (1) mit dem Sicherheitssystem nach einem der Ansprüche 1 bis 5, **dadurch gekennzeichnet, dass** die Öffnung für den Austritt des Wärmeträgermediums (4) aus dem Verteiler (8) für das Wärmeträgermedium die Form eines zwischen den Batteriezellen eingefügten Rohrs aufweist.

7. Ein Verfahren zum Betrieb des Batteriemoduls (1) mit dem Sicherheitssystem nach einem der Ansprüche 1 bis 6, **dadurch gekennzeichnet, dass** bei Erreichen einer ersten kritischen Temperatur der Zugang des Flammschutzmittels (3) zum Verteiler (8) des Wärmeträgermediums, durch den das Flammschutzmittel (3) über die Öffnungen für den Austritt des Wärmeträgermediums (4) in den Strömungsraum des Wärmeübertragungsmediums (4) zwischen den Batteriezellen abgeleitet wird, geöffnet ist, wobei das Wärmeübertragungsmedium (4) über die Abflussleitung (14) in den Vorratsbehälter (2) für das Flammschutzmittel abgeleitet wird.

8. Das Verfahren zum Betrieb des Batteriemoduls (1) mit dem Sicherheitssystem nach Anspruch 7, **dadurch gekennzeichnet, dass** bei Erreichen der ersten kritischen Temperatur der Zugang des Wärmeträgermediums (4) zum Verteiler (8) geschlossen wird.

9. Das Verfahren zum Betrieb des Batteriemoduls (1) mit dem Sicherheitssystem nach einem der Ansprüche 7 bis 8, **dadurch gekennzeichnet, dass** bei Erreichen einer zweiten kritischen Temperatur zumindest ein Teil des Verteilers (8) für das Wärmeträgermedium geschmolzen wird, wobei die zweite kritische Temperatur höher ist als die erste kritische Temperatur.

## Revendications

1. Un module de batterie (1) muni d'un système de sécurité comprenant un réservoir (2) d'un retardateur de flamme destiné à stocker le retardateur de flamme (3), relié au module de batterie (1), où le module de batterie (1) comprend un ensemble d'au moins 3 cellules de batterie, où les cellules de batterie sont disposées de manière à former entre elles un espace permettant la circulation d'un fluide caloporteur (4), où le module de batterie (1) comprend un circuit de refroidissement (5) du module de batterie comprenant une entrée (6) du fluide caloporteur, une sortie (7) du fluide caloporteur, et un collecteur (8) du fluide caloporteur, où le collecteur (8) du fluide caloporteur est relié à l'entrée (6) du fluide caloporteur et comprend au moins deux orifices espacés les uns des autres pour l'écoulement du fluide caloporteur (4) dans l'espace prévu pour la circulation du fluide caloporteur (4) entre les cellules de batterie, où le réservoir (2) du retardateur de flamme est relié au collecteur (8) du fluide caloporteur, **caractérisé en ce que** le circuit de refroidissement (5) du module de batterie comprend un refroidisseur (13) du fluide caloporteur et une conduite de vidange (14) reliant la sortie (7) du fluide caloporteur et le refroidisseur (13) du fluide caloporteur, où la conduite de vidange (14) est pourvue d'une deuxième vanne à plusieurs voies (15) et le réservoir (2) du retardateur de flamme est relié à la conduite de vidange (14) par la deuxième vanne à plusieurs voies (15), où la deuxième vanne à plusieurs voies (15) est une vanne à trois voies comportant deux positions, où, dans la première position, le passage vers le refroidisseur (13) du fluide caloporteur est ouvert et le passage vers le réservoir (2) du retardateur de flamme est fermé, et dans la deuxième position, le passage vers le refroidisseur (13) du fluide caloporteur est fermé et le passage vers le réservoir (2) du retardateur de flamme est ouvert.

2. Le module de batterie (1) avec le système de sécurité selon la revendication 1, **caractérisé en ce que** le réservoir (2) du retardateur de flamme est relié par une conduite de raccordement (9) directement au collecteur (8) du fluide caloporteur, où la conduite de raccordement (9) comprend un joint d'étanchéité (10) ou une vanne (12), où le joint d'étanchéité (10) est constitué d'un matériau dont la température de fusion correspond à une première température critique du module de batterie (1), et la vanne comprend une commande électronique reliée à un capteur de température.

3. Le module de batterie (1) avec le système de sécurité selon la revendication 2, **caractérisé en ce que** la conduite de raccordement (9) comprend le joint d'étanchéité (10), où au moins une partie du collecteur (8) du fluide caloporteur est réalisée dans un matériau dont la température de fusion est supérieure à la température de fusion du joint d'étanchéité (10).

4. Le module de batterie (1) avec le système de sécurité selon l'une quelconque des revendications 1 à 2, **caractérisé en ce que** le circuit de refroidissement (5) du module de batterie comprend une conduite d'alimentation (11) du fluide caloporteur reliée à l'entrée (6) du fluide caloporteur et munie d'une première vanne à plusieurs voies (12), où le réservoir (2) du retardateur de flamme est relié au collecteur (8) du fluide caloporteur par la conduite d'alimentation (11), et où le réservoir (2) du retardateur de flamme est relié à la conduite d'alimentation (11) par la première vanne à plusieurs voies (12).

5. Le module de batterie (1) avec le système de sécurité selon la revendication 4, **caractérisé en ce que** la première vanne à plusieurs voies (12) est une vanne à trois voies comportant deux positions, où, dans la première position, le passage du fluide caloporteur (4) vers le collecteur (8) est ouvert et le passage du retardateur de flamme (3) est fermé, et dans la deuxième position, le passage du retardateur de flamme (3) vers le collecteur (8) du fluide caloporteur est ouvert et le passage du fluide caloporteur (4) est fermé.

6. Le module de batterie (1) avec le système de sécurité selon l'une quelconque des revendications 1 à 5, **caractérisé en ce que** l'orifice de sortie du fluide caloporteur (4) du collecteur (8) de fluide caloporteur a la forme d'un tuyau inséré entre les cellules de la batterie.

7. Un procédé de fonctionnement du module de batterie (1) avec le système de sécurité selon l'une quelconque des revendications 1 à 6, **caractérisé en ce que** lorsqu'une première température critique est atteinte, l'accès du retardateur de flamme (3) au collecteur (8) du fluide caloporteur, à travers lequel le retardateur de flamme (3) est évacué par les orifices de sortie du fluide caloporteur (4) vers l'espace de circulation du fluide caloporteur (4) entre les cellules de la batterie, est ouvert, où le fluide caloporteur (4) est alors évacué par la conduite de vidange (14) vers le réservoir (2) du retardateur de flamme.

8. Le procédé de fonctionnement du module de batterie (1) avec le système de sécurité selon la revendication 7, **caractérisé en ce que**, lorsque la première température critique est atteinte, l'accès du fluide caloporteur (4) au collecteur (8) est fermé.

9. Le procédé de fonctionnement du module de batterie (1) avec le système de sécurité selon l'une quelconque des revendications 7 à 8, **caractérisé en ce qu**'au moins une partie du collecteur (8) du fluide caloporteur est fondue lorsqu'une deuxième température critique est atteinte, où la deuxième température critique est supérieure à la première température critique.
